# EUROPÄISCHE PATENTSCHRIFT

(11) **EP 3 069 598 B1**
(45) Veröffentlichungstag und Bekanntmachung des Hinweises auf die Patenterteilung: **28.03.2018**
(21) Anmeldenummer: 16151649.7
(22) Anmeldetag: 18.01.2016
(51) Int. Cl.: A01D 90/12, A01F 15/07, A01F 15/08

(54) **BALLENPRESSE**
BALING PRESS
PRESSE À FOURRAGE

(30) Priorität: 20.03.2015 DE 102015003695
(43) Veröffentlichungstag der Anmeldung: 21.09.2016
(73) Patentinhaber: PÖTTINGER Landtechnik GmbH, 4710 Grieskirchen (AT)
(72) Erfinder: BALDINGER, Markus, 4084 St. Agatha (AT); PÖTTINGER, Klaus, 4710 Grieskirchen (AT); PRECHTL, Wolfgang, 4722 Bruckwaasen (AT); PREIMESS, Hans-Jörg, 9811 Lendorf (AT); ZWEIMÜLLER, Manuel, 4753 Taiskirchen (AT); KLEESADL, Johann, 4181 Oberneukirchen (AT); LACKNER, Christian, 4060 Leonding (AT); KRAFT, Andreas, 4752 Riedau (AT); HINTERHÖLZL, Christoph, 4084 St. Agatha (AT); ALTMANN, Johannes, 4720 Kallham (AT)
(74) Vertreter: Thoma, Michael

(56) Entgegenhaltungen:
- EP-A1- 1 522 215
- DE-U1- 29 911 916

## Beschreibung

Die vorliegende Erfindung betrifft eine Ballenpresse mit einem Fahrwerk zum Abstützen am Boden, einem Aufsammler zum Aufsammeln von Erntegut vom Boden, einem Ballenformer zum Formen des aufgesammelten Ernteguts zu Ballen, einem Wickler zum Umwickeln des Ballens mit einem Netz, einer Folie oder dergleichen, sowie einer Hangausgleichseinrichtung zum Verkippen des Wicklers und/oder des Ballenformers entgegen einer Hangneigung.

Bei Ballenpressen ist dem Ballenformer regelmäßig ein Wickler nachgeordnet, der einen fertig geformten Ballen mit einem Netz, einer Folie oder einem anderen Wickelmaterial wie beispielsweise einer Schnur oder einer Membran oder dergleichen umwickelt. Solche Wickler können mit dem Ballenformer zusammen auf einem gemeinsamen Maschinenrahmen oder einem Chassisteil angeordnet sein, wobei der Wickler an einer Auswurföffnung des Ballenformers angeordnet sein kann, um die aus der Ballenformkammer ausgeworfenen Erntegutballen zu übernehmen, wobei ggf. zwischen dem Ballenformer und dem Wickler noch ein Übergabeförderer beispielsweise mit einem Auswurf- bzw. Übergabeschlitten vorgesehen sein kann.

In unebenem Gelände kann es hierbei dazu kommen, dass der Ballen am Wickler nicht in der gewünschten Lage zu liegen kommt, da der Ballen durch Hangabtriebskräfte in seiner Lage beeinflusst wird. Dabei kann der Übergabevorgang an den Wickler selbst gestört werden oder der Ballen kann nach Übergabe an den Wickler auf dem Wicklertisch verrutschen, so dass er dort nicht mehr die gewünschte Lage einnimmt. Als Folge hieraus kommt es zu Störungen beim Wickelvorgang, wobei der Ballen nicht mehr ordnungsgemäß umwickelt werden oder der Wickelvorgang erst gar nicht gestartet werden kann.

Es wurde daher bereits angedacht, die Übergabe des fertig geformten Ballens an den Wickler zu verlangsamen oder auch den Wickelvorgang im Wickler erst dann zu beginnen, wenn sich die Ballenpresse wieder in ebenem Gelände befindet. Hierdurch wird jedoch die Leistung der Ballenpresse spürbar beeinträchtigt. Zudem kann es bei großflächig geneigtem Gelände dazu kommen, dass die eigentliche Feldbearbeitung unterbrochen und die geneigte Fläche verlassen werden muss, um in entfernterem, ebenem Gelände den Ballen wickeln zu können.

Aus der Schrift DE 299 11 916 U1 ist es ferner bekannt, zur Vermeidung der vorgenannten Probleme eine Hangausgleichseinrichtung vorzusehen, mittels derer der Wickeltisch des Wicklers verkippt bzw. geneigt und somit eine sich in unebenem Gelände eigentlich einstellende Neigung gegenüber einer horizontalen Ebene ausgeglichen werden kann. Hierzu ist der Wickeltisch um eine liegende Querachse schwenkbar gelagert und durch einen Stellaktor verkippbar, der mit Hilfe eines Senklots angesteuert werden kann, um eine möglichst horizontale Ausrichtung des Wickeltischs zu erreichen. Hierdurch kann auch bei steileren Bergauf- oder Bergabfahrten der Ballen auf einem eben ausgerichteten Wickeltisch umwickelt werden. Allerdings wird die Ballenpresse in Längsrichtung recht sperrig und aufwändig, da ein Übergabeförderer, der einen fertig geformten Ballen von der Ballenformkammer zum Wickeltisch fördert, verkippbar ausgebildet werden muss, um einen sich durch die Ausgleichsbewegungen des Wickeltischs einstellenden Höhenunterschied ausgleichen zu können. Zudem verbleibt die Problematik, dass ein Ballen bei Schrägfahrten näherungsweise entlang einer Höhenlinie eines Hangs auf dem Wickeltisch verrutschen bzw. nicht verlässlich an den Wickler übergeben werden kann, da nur Hangneigungen in Fahrtrichtung, d.h. Steigungen und Gefälle ausgeglichen werden können.

Aus der Schrift DE 10 2013 108 246 A1 ist ferner eine Rundballenpresse bekannt, bei der der Ballenformer bzw. dessen Ballenformkammer in der Höhe gegenüber dem Boden verstellt werden kann. Hierzu ist eine Knickdeichsel in Verbindung mit einer von der Fahrwerksachse deutlich beabstandeten Anordnung der Ballenformkammer vorgesehen, so dass ein Abknicken der Knickdeichsel eine Höhenverstellung der Ballenformkammer bewirkt. Diese Höhenverstellbarkeit soll dazu genutzt werden, beim Auswerfen eines Ballens ein ausreichendes Gefälle zum Wickeltisch sicherzustellen und eine Kollision der aufklappbaren Ballenformkammer-Rückwand mit dem Wickler zu vermeiden. Die zuvor geschilderten Probleme hinsichtlich der Ballenübergabe und des Wickelvorgangs bei übermäßigen Hangneigungen wird hierbei jedoch nicht gelöst.

Der vorliegenden Erfindung liegt daher die Aufgabe zugrunde, eine verbesserte Ballenpresse der eingangs genannten Art zu schaffen, die Nachteile des Standes der Technik vermeidet und Letzteren in vorteilhafter Weise weiterbildet. Insbesondere soll ein störungsfreies Wickeln der Ballen auch bei größeren Hangneigungen ermöglicht werden, ohne hierfür einen kompakten, einfachen Maschinenaufbau opfern zu müssen.

Erfindungsgemäß wird die genannte Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, einen Hangneigungsausgleich zumindest quer zur Fahrtrichtung vorzunehmen. Erfindungsgemäß umfasst die Hangausgleichseinrichtung zumindest einen Querneigungs-Stellaktor zum Verkippen des Ballenformers und/oder des Wicklers entgegen einer Hangneigung quer zur Fahrtrichtung. Hierdurch können Hangneigungen bei Schrägfahrten bzw.

Fahrten näherungsweise entlang von Höhenlinien zumindest teilweise kompensiert oder reduziert werden, wodurch Störungen beim Wickelvorgang oder der Übergabe des Ballens an den Wickler auch bei hangparallelen Fahrten besser vermieden werden können.

Der genannte Querneigungsausgleich bzw. das genannte Verkippen quer zur Fahrtrichtung kann dabei in Weiterbildung der Erfindung zusätzlich zu einer Verkippbarkeit des Ballenformers und/oder des Wicklers in Fahrtrichtung vorgesehen sein. Vorteilhafterweise kann die genannte Hangausgleichseinrichtung auch zumindest einen Nickneigungs-Stellaktor zum Verkippen des Ballenformers und/oder des Wicklers um eine liegende, quer zur Fahrtrichtung ausgerichtete Nickachse aufweisen. Durch einen solchen zusätzlichen Hangneigungsausgleich auch in Fahrtrichtung können Probleme bei der Ballenübergabe oder dem Wickelvorgang auch bei Bergauf- oder Bergabfahrten vermieden werden.

Grundsätzlich kommt es hierbei in Betracht, nur den Wickler in der genannten Weise zu verkippen und den vorgeschalteten Ballenformer und ggf. einen dazwischen angeordneten Übergabeförderer unverkippt zu belassen, um das Aufsammeln des Ernteguts vom Boden nicht zu behindern bzw. die Übergabe des von der Aufsammelvorrichtung aufgesammelten Ernteguts an den Ballenformer nicht durch eine zu starke Neigung des Ballenformers gegenüber der Aufsammelvorrichtung zu beeinträchtigen. Gemäß einem weiteren Aspekt der vorliegenden Erfindung kann die Hangausgleichseinrichtung jedoch ein gemeinsames Verkippen des Ballenformers und des Wicklers vorsehen, so dass beim Neigungsausgleich zumindest kein größerer Winkelversatz zwischen Ballenformer und Wickler entsteht. Dies verbessert die Übergabe eines geformten Ballens vom Ballenformer an den Wickler noch weiter. Zudem vereinfacht sich der Aufbau der Ballenpresse und insbesondere die Hangausgleichseinrichtung beträchtlich, wobei sperrige und konstruktiv aufwändige Übergabevorrichtungen zwischen Ballenformer und Wickler nicht benötigt werden, obwohl gleichwohl ein Übergabeförderer prinzipiell vorgesehen sein kann. Die Hangneigungsausgleicheinrichtung kann insbesondere den Wickler und den Ballenformer in einer relativ zueinander gleich bleibenden Winkelstellung halten, auch wenn der Ballenformer und der Wickler gegenüber dem Fahrwerk quer zur Fahrtrichtung und/oder in Fahrtrichtung verkippt werden, um eine entsprechende Hangneigung auszugleichen oder zu reduzieren. Alternativ kann gleichwohl vorgesehen sein, den Ballenformer und den Wickler individuell und unabhängig voneinander zu verkippen.

Insbesondere kann in vorteilhafter Weiterbildung der Erfindung eine gemeinsame Lagerung von Ballenformer und Wickler vorgesehen sein. Beispielsweise kann der Wickler an einem Chassisteil befestigt sein, an dem auch der Ballenformer befestigt ist, so dass die vorgenannten Querneigungs- und/oder Nickneigungs-Stellaktoren lediglich das genannte gemeinsame Chassisteil verkippen brauchen, um einen Neigungsausgleich von Ballenformer und Wickler herbeizuführen.

Die vorgenannte Verkippbarkeit des Ballenformers und/oder des Wicklers kann hierbei grundsätzlich in verschiedener Art und Weise erreicht werden. In vorteilhafter Weiterbildung der Erfindung kann ein Neigungsausgleich quer zur Fahrtrichtung bzw. ein Verkippen des Ballenformers und/oder des Wicklers quer zur Fahrtrichtung mit Hilfe eines höhenverstellbaren Fahrwerks erzielt werden, bei dem eine rechte Fahrwerksseite und/oder eine linke Fahrwerksseite unabhängig von und/oder gegenläufig zu einer jeweils anderen Fahrwerksseite höhenverstellt werden kann. Hierbei kann bereits ausreichend sein, wenn nur eine Fahrwerksseite höhenverstellbar ausgebildet ist. Wird beispielsweise eine rechte Fahrwerksseite tiefer ausgefahren, wird die Ballenpresse nach links verkippt, während die Ballenpresse nach rechts verkippt, wenn das genannte rechtsseitige Fahrwerksteil höher eingezogen wird. Vorteilhafterweise können jedoch beide Fahrwerksseiten höhenverstellbar ausgebildet sein, um unabhängig von der Orientierung der Hangneigung ohne Kollisionsprobleme bzw. mit ausreichender Bodenfreiheit einen Neigungsausgleich vornehmen zu können.

Insbesondere kann in Weiterbildung der Erfindung ein Bogey-Fahrwerk vorgesehen sein, bei dem zwei Radachsen nach Art einer Zwillingsachse zusammengefasst und mittels schwenkbarer Achsträger verschwenkbar sein können. Durch Auseinanderschwenken und/oder Zusammenschwenken der Radachsen werden die Räder gegenüber dem Chassisteil, an dem die Achsträger angelenkt sind, höhenverstellt.

Der vorgenannte Querneigungs-Stellaktor der Hangneigungsausgleichseinrichtung kann hierbei ein Schwenkaktor zum Verschwenken der genannten Achsträger sein und beispielsweise in Form eines Druckmittelzylinders an den genannten schwenkbaren Achsträgern angreifen. Insbesondere können die Achsträger an einer gemeinsamen oder zwei separaten, liegend quer zur Fahrtrichtung verlaufenden Schwenkachsen gelagert und durch den Druckmittelzylinder, der an jedem der Achsträger einen von dessen Schwenkachse beabstandeten, gelenkigen Anlenkpunkt besitzen kann, miteinander verbunden sein. Hierdurch kann mit einem einfachen linearen Stellaktor durch Ein- und Ausfahren die Höhe des Bogey-Fahrwerks verstellt werden.

Ein solches höhenverstellbares Fahrwerk kann hierbei nicht nur zum Ausgleichen oder Reduzieren von Querneigungen bzw. zum Verkippen des Ballenformers und/oder des Wicklers quer zur Fahrtrichtung genutzt werden, sondern kann auch dazu dienen, durch gleichläufiges Höhenverstellen der rechten und linken Fahrwerksseite kurzfristig die Bodenfreiheit zu erhöhen, beispielsweise beim Überfahren von Kuppen oder beim Durchfahren von Senken.

Insbesondere kann eine solche Fahrwerks-Höhenverstellung auch dazu genutzt werden, um Nickneigungen des Ballenformers und/oder des Wicklers bei Bergauf- und/oder Bergabfahrten auszugleichen bzw. zu reduzieren, insbesondere auch bei einer Ausbildung der Ballenpresse als Anbaugerät, das über eine Deichsel oder eine andere Anbauvorrichtung an einen Schlepper angebaut werden kann. Betrachtet man den Anbaupunkt bzw. den Deichselanlenkpunkt am Schlepper als höhenfest, kann durch ein Nach-unten-Ausfahren des Fahrwerks und damit ein Höherstellen des Chassis eine Hangneigung bei Bergauffahrten reduziert werden, während umgekehrt bei Bergabfahrten durch ein Absenken des Chassis, d.h. ein Nach-oben-Einziehen des Fahrwerks eine entsprechende Hangneigung ausgeglichen werden kann. Das höhenverstellbare Fahrwerk erfüllt dabei eine Doppelfunktion. Durch einseitiges oder gegenläufiges Höhenverstellen der Fahrwerksseiten bewirkt es eine Kompensation von Querneigungen. Durch gemeinsames, beidseitiges Höhenverstellen bewirkt es eine Kompensation von Längsneigungen.

Alternativ oder zusätzlich kann zum Ausgleich von Nickneigungen bei Bergauf- und Bergabfahrten eine Knickdeichsel vorgesehen sein, mittels derer der Ballenformer und/oder der Wickler um eine liegende, quer zur Fahrtrichtung ausgerichtete Nickachse verkippt werden kann, um Hangneigungen bei Bergauf- und Bergabfahrten auszugleichen. Der vorgenannte Nickneigungs-Stellaktor der Hangausgleichseinrichtung kann hierbei ein die Knickdeichsel verschwenkender Schwenkaktor, beispielsweise in Form eines Druckmittelzylinders sein.

Zusätzlich zu der vorgenannten Höhenverstellbarkeit des Fahrwerks kann ein zumindest teilweiser Ausgleich von Hangneigungen quer zur Fahrtrichtung auch dadurch erreicht werden, dass der Ballenformer und/oder der Wickler gegenüber einem vom Fahrwerk am Boden abgestützten Chassisteil um eine liegende, in Fahrtrichtung weisende Kippachse verkippbar gelagert ist. Hierbei kann beispielsweise ein starres oder zumindest nicht höhenverstellbares Fahrwerk Verwendung finden, durch das ein Unterteil des Maschinenrahmens bzw. ein unteres Chassisteil immer bodenparallel geführt wird. Ein Neigungsausgleich wird durch Verkippen des Ballenformers und/oder des Wicklers gegenüber diesem unteren Chassisteil herbeigeführt.

Hierbei kann eine feste, vorzugsweise mittig angeordnete Kippachse vorgesehen sein, die sich liegend etwa in Fahrtrichtung erstreckt, so dass sich auf gegenüberliegenden Seiten der genannten Kippachse befindliche Abschnitte gegenläufig absenken und anheben. Die genannte Kippachse kann hierbei insbesondere in einer vertikalen Längsmittelebene der Ballenpresse angeordnet sein. Mit einer solchen festen, mittigen Kippachse kann ein besonders schnelles Ansprechen der Neigungsausgleichssteuerung erzielt werden. Ein relativ kleiner Stellweg des Neigungs-Aktors wird in eine größere Neigebewegung des Maschinenrahmens und es Maschinenaufbaus umgesetzt.

Alternativ oder zusätzlich zu einer chassisfesten Kippachse können auch zwei quer zur Fahrtrichtung voneinander beabstandete Kippachsen vorgesehen sein, die sich liegend etwa in Fahrtrichtung erstrecken können und gegenüber dem Chassis verschiebbar bzw. bewegbar gelagert sind, insbesondere um Schwenkbewegungen jeweils um die andere Kippachse zuzulassen. Beispielsweise kann der Ballenformer und/oder der Wickler und/oder ein diese beiden Komponenten tragendes Chassisteil mit in Fahrtrichtung betrachtet rechts und links liegenden Abschnitten gelenkig an Hubaktoren angelenkt sein, so dass wahlweise durch Beaufschlagung eines rechten Hubaktors oder eines linken Hubaktors ein Verkippen um den linken Abschnitt oder um den rechten Abschnitt herbeiführbar ist. Die gelenkige Anlenkung der Hubaktoren kann hierbei jeweils eine liegende, in Fahrtrichtung weisende Kippachse rechts und links an Randabschnitten des genannten Chassisteiles und/oder des Ballenformers oder des Wicklers bilden.

Das Verkippen des Ballenformers und/oder des Wicklers entgegen der jeweiligen Hangneigung, um eine möglichst horizontale Ausrichtung zu erreichen, kann grundsätzlich manuell gesteuert bzw. betätigt werden. Vorteilhafterweise kann jedoch auch eine halbautomatische oder vollautomatische Ansteuerung der Hangneigungsausgleichseinrichtung vorgesehen sein.

Insbesondere kann in Weiterbildung der Erfindung eine Steuervorrichtung vorgesehen sein, die die Hangneigungsausgleichseinrichtung in Abhängigkeit des Betriebszustands des Ballenformers und/oder des Wicklers ansteuert, insbesondere derart, dass der Ballenformer und/oder der Wickler nur vorübergehend entgegen der Hangneigung verkippt wird, wenn dies für eine Ballenübergabe vom Ballenformer an den Wickler und/oder für einen Wickelvorgang notwendig ist. Insbesondere kann die genannte Steuervorrichtung einen Betätiger zum nur zeitlich begrenzten Verkippen des Ballenformers und/oder des Wicklers während einer Ballenübergabe vom Ballenformer an den Wickler und/oder während eines Ballenwickelvorganges aufweisen. Wenn der Wickler inaktiv ist und/oder der Ballenformer noch keinen Ballen auswirft und/oder sich noch nicht dem Ende eines Ballenformzyklus nähert, kann der genannte Betätiger die Hangneigungsausgleichseinrichtung deaktivieren und/oder noch kein Verkippen herbeiführen und/oder den Ballenformer und/oder Wickler in einer hangparallelen Ausrichtung halten. Wird jedoch die Wickelvorrichtung aktiviert und/oder eine Ballenübergabe vom Ballenformer an den Wickler initiiert und/oder nähert sich der Ballenformer dem Ende eines Ballenformzyklus, kann der Betätiger die Hangneigungsausgleichseinrichtung betätigen, um den Ballenformer und den Wickler entgegen der Hangneigung zu verkippen, um einen Ausgleich der Hangneigung zu erzielen. Sobald der Wickelvorgang abgeschlossen ist, kann das Verkippen des Ballenformers und/oder Wicklers wieder rückgängig gemacht werden, um die Übergabe des Ernteguts vom Aufsammler an den Ballenformer möglichst wenig zu behindern.

Die konkreten Zeitpunkte, zu denen die genannte Steuervorrichtung das Verkippen des Ballenformers und/oder Wicklers zum Zwecke des Hangneigungsausgleichs veranlasst und wieder beendet, können gegenüber den vorgenannten Betriebszeitpunkten zeitlich versetzt sein, beispielsweise in Form eines bestimmten Vorlaufs, der die Betätigung der Neigungs-Stellaktoren ermöglicht und/oder in Form eines gewissen Nachlaufs gegenüber dem genannten Zeitpunkt der Beendigung des Wickelvorgangs, um eine gewisse Sicherheitstoleranz zu erzielen. Vorteilhafterweise jedoch werden der Ballenformer und/oder der Wickler entgegen der Hangneigung nur in einem relativ engen Zeitfenster um die Ballenübergabe und/oder den Wickelvorgang herum verkippt und in der übrigen Betriebszeit in ihrer unverkippten Neutralstellung gehalten.

Alternativ zu einer solchen nur zeitlich begrenzten Verkippung zum Neigungsausgleich kann die Steuervorrichtung jedoch auch kontinuierlich arbeiten bzw. die auftretende Hangneigung stets ausgleichen und die Neigungs-Stellaktoren während des Betriebs nicht nur in bestimmten Zeitfenstern ansteuern.

Berücksichtigt die Steuervorrichtung dabei über das Signal des Neigungssensors hinaus noch weitere Betriebsparameter der Ballenpresse, insbesondere einen oder mehrere Betriebszustandsparameter des Ballenformers oder Wicklers, kann dies beispielsweise auch dergestalt ausgeführt werden, dass die Steuervorrichtung die Stärke der Gegenneigung bzw. den Grad des Neigungsausgleichs an den Betriebszustand der Ballenpresse anpasst. Bei einer Ballenpresse kann eine stärkere Neigungskompensation vorgesehen werden, wenn der Wickler in Betrieb ist und/oder ein Ballen übergeben werden soll, und eine schwächere Neigungskompensation vorgesehen werden, wenn der Wickler außer Betrieb ist und kein Ballen übergeben wird und/oder der Ballenformer in Betrieb ist.

Vorteilhafterweise wird die Hangneigungsausgleichseinrichtung hierbei unter Berücksichtigung der Richtung und/oder Stärke der Hangneigung betätigt. Vorteilhafterweise kann eine Bestimmungseinrichtung zum Bestimmen der Hangneigung und/oder der Schrägstellung der Ballenpresse vorgesehen sein, wobei Steuermittel die Hangausgleichseinrichtung in Abhängigkeit eines Signals der genannten Bestimmungseinrichtung und damit in Abhängigkeit der bestimmten Hangneigung und/oder Schrägstellung ansteuern. Die genannten Steuermittel steuern die Neigungsaktoren der Hangneigungsausgleichs-einrichtung dabei insbesondere derart an, dass eine möglichst horizontale Ausrichtung des Ballenformers und/oder des Wicklers erzielt wird.

Die vorgenannte Bestimmungseinrichtung zum Bestimmen der Hangneigung kann hierbei auch eine Abweichung des Ballenformers und/oder des Wicklers gegenüber einer horizontalen Ausrichtung bestimmen, beispielsweise mit Hilfe eines Lotpendels und/oder einer Wasserwaage und/oder eines Absolutneigungssensors. Die genannten Steuermittel können die Neigungs-Stellaktoren der Hangneigungsausgleichseinrichtung dabei derart ansteuern, dass die bestimmte Abweichung gegenüber der horizontalen Ausrichtung möglichst klein wird.

Der vorgenannte Neigungssensor zum Erfassen der Neigung der Ballenpresse kann grundsätzlich verschieden ausgebildet sein. Beispielsweise kann der Neigungssensor eine in einem schalenförmigen Käfig angeordnete Kugel umfassen, deren Position in der Käfigschale elektronisch erfasst wird, oder ein Federmassesystem umfassen, bei dem die Auslenkung einer kleinen Testmasse in Abhängigkeit von der Lage elektronisch erfasst wird.

Insbesondere kann in vorteilhafter Ausbildung der Erfindung ein elektronischer Neigungssensor vorgesehen sein, der eine dielektrische Flüssigkeit enthält, deren Lage bzw. Pegel in einem Aufnahmebehältnis kapazitiv oder induktiv erfasst werden kann. Ein solcher Neigungssensor hat ein äußerst rasches Ansprechverhalten und kann auch bei holprigem Feldbetrieb verlässlich die Neigung der Ballenpresse erfassen.

In vorteilhafter Weiterbildung der Erfindung kann der zumindest eine Neigungssensor dabei mehrachsig arbeitend ausgebildet sein und/oder es können mehrere Neigungssensoren zur mehrachsigen Neigungserfassung vorgesehen sein, um die Neigung des Maschinenraums im Raum bezüglich mehrerer Achsen erfassen zu können. Insbesondere kann mittels des zumindest einen Neigungssensors eine Querneigung des Maschinenaufbaus nach rechts und links quer zur Fahrtrichtung und eine Nickneigung nach vorne und hinten in Fahrtrichtung jeweils gegenüber einer Vertikalen erfasst werden.

Gegebenenfalls kann aber auch nur mit einem oder mehreren einachsigen Neigungssensoren gearbeitet werden, die nur eine Neigung in einer Ebene erfassen. Dies kann insbesondere dann ausreichend sein, wenn die Ballenpresse nur einen einachsigen Neigungsausgleich vorsieht, insbesondere in einer Ebene senkrecht zur Fahrtrichtung bzw. ein Verkippen des Maschinenaufbaus quer zur Fahrtrichtung nach rechts und links. Der einachsige Neigungssensor wird dann vorteilhafterweise derart angeordnet, dass eine Neigung des Maschinenrahmens quer zur Fahrtrichtung nach rechts und links erfasst wird.

Der zumindest eine Neigungssensor kann hierbei grundsätzlich an verschiedener Stelle der Ballenpresse angebracht sein, beispielsweise unmittelbar am Maschinenrahmen oder einem damit verbundenen Abschnitt des Maschinenaufbaus, wobei der Neigungssensor vorteilhafterweise im Inneren eines Gehäuseteils aufgenommen sein kann, um den Sensor vor äußeren Beschädigungen zu schützen.

Der zumindest eine Neigungssensor kann hierbei eine Abweichung der Ausrichtung des Maschinenrahmens gegenüber der Vertikalen und/oder gegenüber einer horizontalen Ebene erfassen. Die elektronische Steuervorrichtung steuert dabei die Neigungs-Stellaktoren im Sinne einer Regelung derart an, dass die erfasste Abweichung gegen Null geht, d.h. der Maschinenrahmen möglichst in seine Sollausrichtung wie auf horizontalem Feld kommt, soweit dies vorbestimmte Verkippungsgrenzen für die Verkippung des Maschinenrahmens gegenüber dem Fahrwerk zulassen.

Die Erfindung wird nachfolgend anhand bevorzugter Ausführungsbeispiele und zugehöriger Zeichnungen näher erläutert. In den Zeichnungen zeigen:

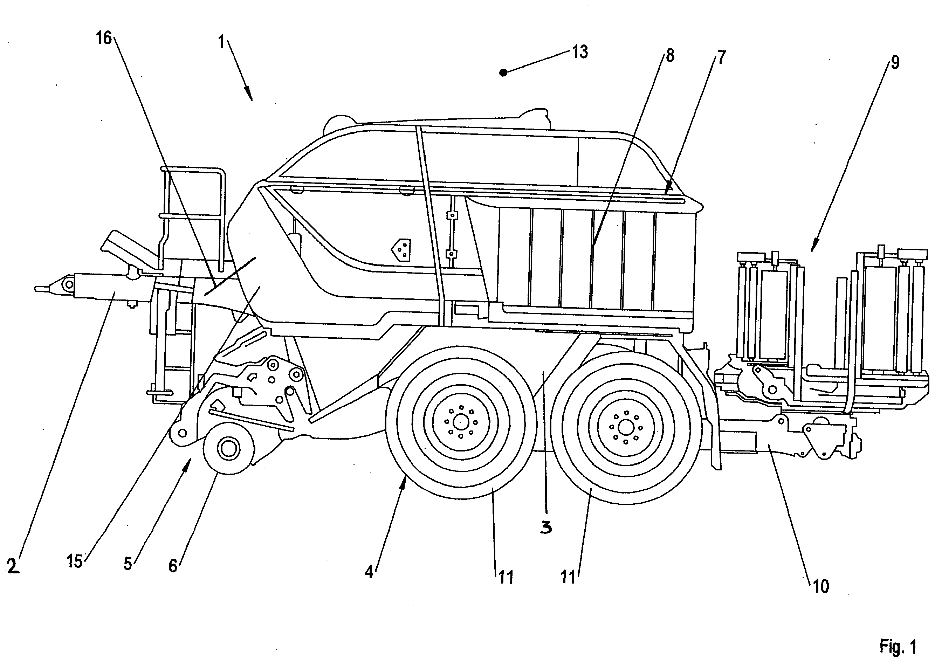

- Fig. 1:: eine schematische Seitenansicht einer Ballenpresse mit einem der Ballenformkammer des Ballenformers nachgeordneten Wickler gemäß einer vorteilhaften Ausführung der Erfindung,

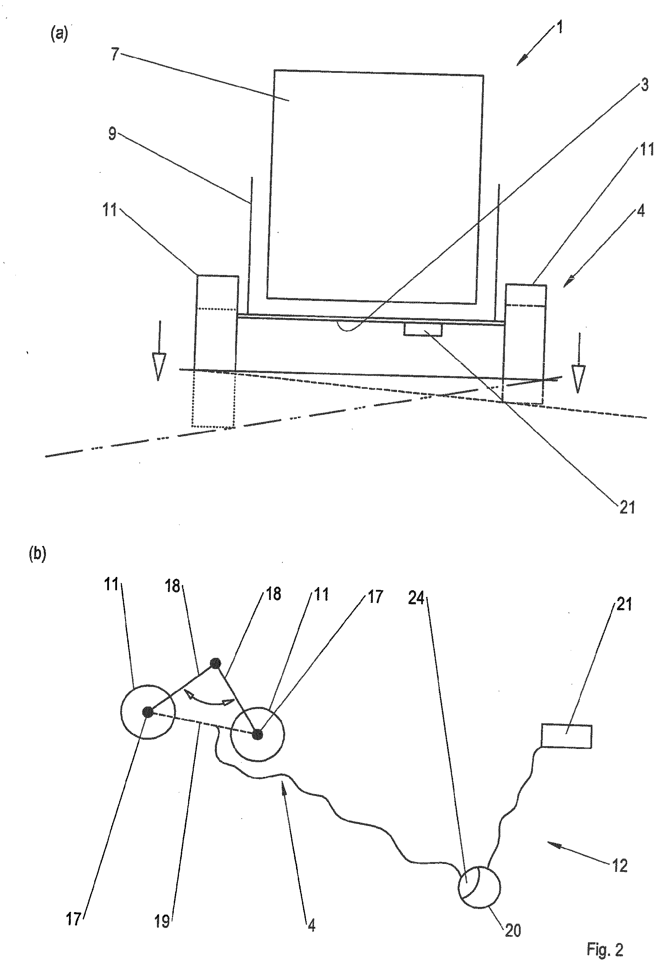

- Fig. 2:: eine schematische Rückansicht der Ballenpresse aus Fig. 1 in der Teilansicht (a), in der ein höhenverstellbares Bogey-Fahrwerk in verschiedenen Höhenstellungen für verschiedene Hangneigungen gezeigt ist, sowie eine schematische Seitenansicht des genannten Bogey-Fahrwerks in der Teilansicht (a), die die Höhenverstellbarkeit des Fahrwerks durch Verschwenken der Achsträger zeigt,

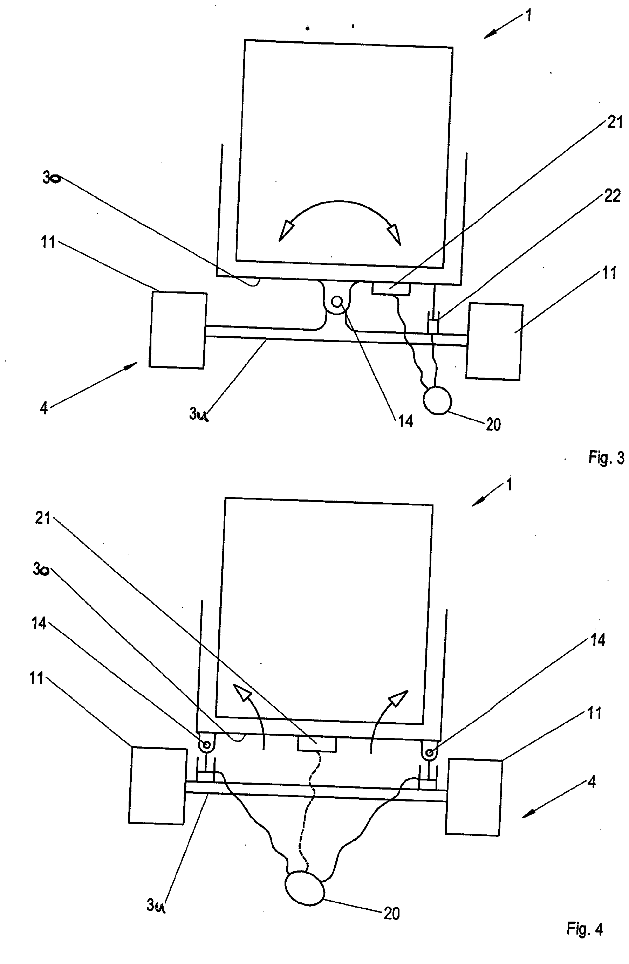

- Fig. 3:: eine schematische Rückansicht der Ballenpresse aus Fig. 1 gemäß einer alternativen Ausführung der Erfindung, bei der ein den Ballenformer und den Wickler tragendes Chassis-Oberteil gegenüber einem Chassis-Unterteil um eine liegende, in Fahrtrichtung weisende Kippachse querverkippbar ist, und
- Fig. 4:: eine schematische Rückansicht der Ballenpresse ähnlich den Figuren 2 und 3, wobei gemäß einer weiteren Ausführung der Erfindung ein Chassis-Oberteil, das den Ballenformer und den Wickler trägt, beidseitig rechts und links gelenkig höhenverstellbar auf einem Chassis-Unterteil abgestützt ist, um durch einseitige Höhenverstellung einen Neigungsausgleich zu erzielen.

Wie Fig. 1 zeigt, kann die Ballenpresse 1 als Anbaugerät ausgebildet sein, das an einen nicht eigens gezeigten Schlepper anbaubar ist, beispielsweise mittels einer Deichsel 2, die mit einem Maschinenrahmen 3 verbunden ist, der durch ein Fahrwerk 4 am Boden abgestützt ist.

An dem Maschinenrahmen 3 kann ein Aufsammler 5 zum Aufsammeln von Erntegut vom Boden aufgehängt sein, wobei der genannte Aufsammler 5 beispielsweise in Form einer Pickup mit einer umlaufend antreibbaren Stachelwalze und einem nachgeschalteten Förderrotor ausgebildet sein kann, um Erntegut wie Heu, Stroh oder Gras vom Boden aufzusammeln. Der genannte Aufsammler 5 kann hierbei durch ein Tastfahrwerk 6 über den Boden geführt und gegenüber dem Maschinenrahmen 3 verschwenkbar sein.

Das vom Aufsammler 5 vom Boden aufgesammelte Erntegut wird an einen Ballenformer 7 übergeben, der in an sich bekannter Weise eine Ballenformkammer 8 aufweisen kann, in der mittels umlaufender Riemen und/oder umlaufender Walzen hereinkommendes Erntegut zu einem Ballen geformt werden kann. Der genannte Ballenformer 7 einschließlich seiner Ballenformkammer 8 kann auf dem genannten Maschinenrahmen 3 gelagert sein.

Dem genannten Ballenformer 7 nachgeordnet ist ein Wickler 9, an den der Ballenformer 7 einen fertig geformten Ballen übergeben kann. Der genannte Wickler 9 kann den Ballen mit einem Netz, einer Folie oder einem anderen Umwicklungsmaterial umwickeln, bevor der umwickelte Ballen dann auf dem Boden abgelegt wird. Der genannte Wickler 9 kann hierzu in an sich bekannter Weise einen Wickeltisch und hier herum angeordnete Wickelwalzen aufweisen, vgl. Fig. 1.

Der genannte Wickler 9 kann vorteilhafterweise mittels eines Wickelvorrichtungsträgers 10 an dem Maschinenrahmen 3 gelagert sein, so dass der Wickler 9 und der Ballenformer 7 gemeinsamen am Maschinenrahmen 3 bzw. einem Chassisteil des Maschinenrahmens 3 gelagert sind.

Um bei Bergauf- und Bergabfahrten und Hangschrägfahrten entstehende Neigungen des Ballenformers 7 und des Wicklers 9 im Sinne von Abweichungen gegenüber einer horizontalen Solllage ausgleichen zu können, kann der Maschinenrahmen 3 mit den daran gelagerten Ballenformer 7 und Wickler 9 gegenüber der Bodenaufstandsfläche, die von den Rädern 11 des Fahrwerks 4 definiert wird, verkippt werden, was mittels einer Hangneigungsausgleichseinrichtung 12 bewerkstelligt wird. Der Maschinenrahmen 3 mit den davon getragenen Elementen Ballenformer 7 und Wickler 9 kann hierbei mehrachsig verkippt werden, insbesondere um eine Nickneigungs-Kippachse 13, die sich liegend quer zur Fahrtrichtung erstreckt, und um eine Querneigungs-Kippachse 14, die sich liegend etwa in Fahrtrichtung erstreckt.

Um bei Bergauf- und Bergabfahrten entstehende Hangneigungen reduzieren zu können, kann eine gegenläufige Verkippung um die genannte Nickneigungs-Kippachse 13 vorgenommen werden. Hierzu kann die genannte Deichsel 2 als Knickdeichsel ausgebildet sein, die um eine liegende, quer zur Fahrtrichtung verlaufende Knickdeichselachse 15 gegenüber dem Maschinenrahmen 3 abgeknickt werden kann, wobei dies durch einen Nickneigungsstellaktor 16 beispielsweise in Form eines an der Knickdeichsel angreifenden Druckmittelzylinders erfolgen kann. Alternativ oder zusätzlich zu der genannten Knickdeichsel kann das Fahrwerk 4 gegenüber dem Maschinenrahmen 3 höhenverstellt werden, wobei durch gleichsinnige Verstellung der rechten und linken Fahrwerkshälften ein Nicken um den Anlenkpunkt der Deichsel 2 am Schlepper herbeigeführt werden kann.

Wie Fig. 2 (b) zeigt, kann das Fahrwerk 4 hierbei als zweiachsiges Bogey-Fahrwerk ausgebildet sein, bei dem die Radachsen 17 zweier paarweise zusammengefasster Räder 11 an schwenkbaren Achsträgern 18 aufgehängt sind. Die genannten Achsträger 18 können hierbei vorteilhafterweise um eine gemeinsame liegende Querachse schwenkbar am Maschinenrahmen 3 angelenkt sein und durch einen Fahrwerksstellaktor 19 relativ zueinander verschwenkt werden, so dass die Räder 11 näher zusammen und weiter voneinander weg verstellt werden können, wodurch sich die Höhenlager der Räder 11 relativ zum Maschinenrahmen 3 ändert. Anstelle einer gemeinsamen Schwenkachse können die genannten Achsträger 18 auch an separaten liegenden Querachsen am Maschinenrahmen 3 angelenkt sein.

Vorteilhafterweise können die rechten und linken Fahrwerksseiten unabhängig voneinander und/oder gegenläufig zueinander höhenverstellt werden. Hierzu können die genannten Fahrwerksstellaktoren 19, die rechten und linken Seiten des genannten Bogey-Fahrwerks zugeordnet sind, von der Hangneigungsausgleichseinrichtung 12 bzw. einer dieser zugeordneten Steuervorrichtung 20 unabhängig voneinander angesteuert werden bzw. unabhängig betätigt werden, so dass wahlweise eine Fahrwerksseite oder beide Fahrwerksseiten abgesenkt oder angehoben werden kann, wie dies Fig. 2 (a) verdeutlicht. Hierdurch können Hangneigungen quer zur Fahrtrichtung ausgeglichen bzw. zumindest reduziert werden. Der Maschinenrahmen 3 sowie die darauf angeordneten Elemente Ballenformer 7 und Wickler 9 werden hierdurch gegenläufig zur Hangneigung, also insbesondere bergwärts verkippt und möglichst horizontal ausgerichtet gehalten.

Die Steuervorrichtung 20 der Hangneigungsausgleichseinrichtung 12 kann hierbei von einer Neigungsbestimmungsvorrichtung 21 ein Signal erhalten, das die Hangneigung und/oder die Abweichung der Maschinenrahmenausrichtung von einer horizontalen Ausrichtung angibt. In Abhängigkeit der bestimmten Neigung und/oder der bestimmten Abweichung von der horizontalen Ausrichtung kann die Steuervorrichtung 20 die Fahrwerksstellaktoren 19 und/oder den Nickneigungsstellaktor 16 für die Knickdeichsel ansteuern, um eine möglichst horizontale Ausrichtung aufrecht zu erhalten.

Vorteilhafterweise kann die Steuervorrichtung 20 hierbei den Betriebszustand des Ballenformers 7 und/oder des Wicklers 9 berücksichtigen und eine zur Hangneigung gegenläufige Verkippung des Maschinenrahmens 3 nur dann veranlassen, wenn eine Ballenübergabe vom Ballenformer 7 an den Wickler 9 durchgeführt wird bzw. ansteht und ein Wickelvorgang am Wickler 9 durchgeführt wird, wie dies eingangs erläutert wurde.

Wie Fig. 3 zeigt, kann alternativ oder zusätzlich zu einer Querneigungsverstellung durch Höhenverstellung der Fahrwerksseiten des Fahrwerks 4 auch eine verkippbare Lagerung des Maschinenrahmens 3 vorgesehen sein. Genauer gesagt kann ein Chassis-Oberteil 3o des Maschinenrahmens 3, an dem der Ballenformer 7 und der Wickler 9 befestigt sind, gegenüber einem Chassis-Unterteil 3u des Maschinenrahmens 3 um eine liegende in Fahrtrichtung weisende Querneigungskippachse 14 verkippt werden. Die genannte Querneigungskippachse 14 kann hierbei ortsfest an den beiden Chassisteilen 3o und 3u befestigt sein und sich insbesondere in einer vertikalen Längsmittelebene der Ballenpresse 1 erstrecken.

Ein Querneigungsstellaktor 22 kann das genannte Chassis-Oberteil 3o und damit den Ballenformer 7 und den Wickler 9 um die Querneigungskippachse 17 verkippen, wobei der genannte Querneigungsstellaktor 22 beispielsweise ein Druckmittelzylinder sein kann, der von der Kippachse 14 beabstandet zwischen die Chassis-Ober- und -Unterteile geschaltet ist. Der genannte Querneigungsstellaktor 22 kann von der genannten Steuervorrichtung 20 in der beschriebenen Weise angesteuert werden, um quer zur Fahrtrichtung auftretenden Hangneigungen möglichst weitgehend auszugleichen, wenn eine Ballenübergabe oder ein Wickelvorgang durchgeführt wird.

Wie Fig. 4 zeigt, kann das Chassis-Oberteil 3o auch um verschiedene Querneigungs-Kippachsen 14 quer zur Fahrtrichtung verkippt werden, wobei sich die genannten mehreren Querneigungs-Kippachsen 14 von einer vertikalen Längsmittelebene der Ballenpresse 1 beabstandet erstrecken können, beispielsweise an rechten und linken Randabschnitten des Maschinenrahmens 3. Die genannten Querneigungskippachsen 14 können hierbei vorteilhafterweise durch daran gelenkig angelenkte Querneigungsstellaktoren 22 gegenüber dem Chassis-Unterteil 3u ausgehoben werden, so dass wahlweise ein Verkippen um die linke Kippachse oder um die rechte Kippachse vorgenommen werden kann. Hierdurch kann gleichermaßen eine quer zur Fahrtrichtung gegebene Hangneigung ausgeglichen bzw. reduziert werden. Von Vorteil ist hierbei, dass es hierbei zu keiner Absenkung einer bergwärts gerichteten Maschinenrahmenseite kommt und daher Bodenfreiheitsprobleme vermieden werden.

## Patentansprüche

1. Ballenpresse mit einem Fahrwerk (4) zum Abstützen am Boden, einem Aufsammler (5) zum Aufsammeln von Erntegut vom Boden, einem Ballenformer (7) zum Formen des aufgenommenen Ernteguts zu Ballen, einem Wickler (9) zum Umwickeln des Ballens mit einem Netz, einer Folie oder dergleichen, sowie einer Hangneigungsausgleichseinrichtung (12) zum Verkippen des Wicklers (9) und/oder des Ballenformers (7) entgegen einer Hangneigung des Bodens, **dadurch gekennzeichnet, dass** die Hangneigungsausgleichseinrichtung (12) zumindest einen Querneigungs-Stellaktor (19; 22) zum Verkippen des Ballenformers (7) und/oder des Wicklers (9) quer zur Fahrtrichtung um zumindest eine liegende, sich etwa in Fahrtrichtung erstreckende Querneigungs-Kippachse (14) aufweist, wobei das Fahrwerk (4) gegenüber einem Chassisteil (3o), an dem der Ballenformer (7) und/oder der Wickler (9) gelagert sind, höhenverstellbar ausgebildet ist, wobei rechte und linke Fahrwerksteile unabhängig voneinander und/oder gegenläufig zueinander höheneinstellbar ausgebildet sind.

2. Ballenpresse nach dem vorhergehenden Anspruch, wobei die Hangneigungsausgleichseinrichtung (12) zumindest einen Nickneigungs-Stellaktor (16; 19) zum Verkippen des Ballenformers (7) und/oder des Wicklers (9) um eine liegende, sich quer zur Fahrtrichtung erstreckende Nickneigungs-Kippachse (13) aufweist.

3. Ballenpresse nach einem der vorhergehenden Ansprüche, wobei die Hangneigungsausgleichseinrichtung (12) ein gemeinsames Verkippen des Ballenformers (7) und des Wicklers (9) gegenüber einer vom Fahrwerk (4) definierten Bodenaufstandsfläche im Wesentlichen ohne Relativbewegung zwischen Ballenformer (7) und Wickler (9) vorsieht.

4. Ballenpresse nach einem der vorhergehenden Ansprüche, wobei eine Steuervorrichtung (20) zum Steuern der Hangneigungsausgleichseinrichtung (12) in Abhängigkeit des Betriebszustands des Ballenformers (7) und/oder des Wicklers (9) vorgesehen ist.

5. Ballenpresse nach dem vorhergehenden Anspruch, wobei die Steuervorrichtung (20) einen Betätiger (24) zum zeitlich begrenzten Verkippen des Ballenformers (7) und/oder des Wicklers (9) während einer Ballenübergabe von dem Ballenformer (7) an den Wickler (9) und/oder während eines Ballenwickelvorgangs aufweist.

6. Ballenpresse nach dem vorhergehenden Anspruch, wobei die Steuervorrichtung nach Abschluss eines Wickelvorgangs und/oder zeitlich außerhalb einer Ballenübergabe und/oder eines Wickelvorgangs die Hangneigungsausgleichseinrichtung (12) deaktiviert und/oder derart ansteuert, dass der Ballenformer (7) und der Wickler (9) in einer bodenparallelen Neutralstellung gehalten sind.

7. Ballenpresse nach einem der vorgehenden Ansprüche, wobei das Fahrwerk (4) als verstellbares Bogey-Fahrwerk ausgebildet ist und Fahrwerksstellaktoren (19) zum Verstellen der Achsträger (18) des Bogey-Fahrwerks einen Teil der Hangneigungsausgleichseinrichtung (12) bilden.

8. Ballenpresse nach einem der vorhergehenden Ansprüche, wobei der Ballenformer (7) und/oder der Wickler (9) und/oder ein Chassis-Oberteil (3o) gegenüber einem vom Fahrwerk (4) getragenen Chassis-Unterteil (3u) verkippbar gelagert ist.

9. Ballenpresse nach dem vorhergehenden Anspruch, wobei der Ballenformer (7) und/oder der Wickler (9) um eine fest an dem Chassis-Unterteil (3u), das vom Fahrwerk (4) getragen wird, mittig angeordnete Querneigungskippachse (14) verkippbar gelagert ist und zumindest ein Querneigungs-Stellaktor (22) von der genannten Querneigungskippachse (14) beabstandet angeordnet ist.

10. Ballenpresse nach einem der vorhergehenden Ansprüche, wobei der Ballenformer (7) und/oder der Wickler (9) und/oder ein den Ballenformer (7) und den Wickler (9) tragendes Chassis-Oberteil (3o) an zwei voneinander beabstandeten, außermittig angeordneten, liegenden etwa in Fahrtrichtung weisenden Querneigungskippachsen (14) gelagert ist, welche Querneigungskippachsen (14) gegenüber einem vom Fahrwerk (4) getragenen Chassis-Unterteil (3u) höhenverstellbar sind.

11. Ballenpresse nach einem der vorhergehenden Ansprüche, wobei eine Bestimmungseinrichtung zum Bestimmen der Hangneigung und/oder einer Schrägstellung der Ballenpresse im Sinne einer Abweichung gegenüber einer horizontalen Ebene vorgesehen ist und Steuermittel zum Ansteuern der Hangneigungsausgleichseinrichtung (12) in Abhängigkeit der bestimmten Hangneigung und/oder der bestimmten Schrägstellung vorgesehen sind.

12. Ballenpresse nach dem vorhergehenden Anspruch, wobei die Steuermittel derart beschaffen sind, dass der Ballenformer (7) und/oder der Wickler (9) mit zunehmend stärkerer Hangneigung zunehmend stärker in gegenläufiger Richtung verkippt werden und/oder der Ballenformer (7) und/oder der Wickler (9) derart verkippt werden, dass die genannte Schrägstellung möglichst klein wird.

13. Ballenpresse nach einem der beiden vorhergehenden Ansprüche, wobei die Bestimmungseinrichtung einen Neigungssensor zum Bestimmen einer absoluten Neigung gegenüber der Horizontalen und/oder gegenüber der Vertikalen aufweist.

## Claims

1. Baling press having a chassis (4) for the support on the ground, a collecting device (5) for collecting harvested material from the ground, a bale forming device (7) for forming the collected harvested material into bales, a wrapping device (9) for enwrapping the bale with a net, a foil or the like, as well as a slope compensation device (12) for tilting the wrapping device (9) and/or the bale forming device (7) against a hill slope of the ground, **characterized in that** the slope compensation device (12) comprises at least one transverse inclination actuator (19; 22) for tilting the bale forming device (7) and/or the wrapping device (9) transversely to the driving direction about at least one horizontal transverse inclination tilting axis (14) approximately extending in the driving direction, wherein the chassis (4) is formed to be height-adjustable with respect to a chassis part (3o), on which the bale forming device (7) and/or the wrapping device (9) is supported, wherein right and left chassis parts are formed to be height-adjustable independently from one another and/or in opposite directions with respect to one another.

2. The baling press according to the preceding claim, wherein the slope compensation device (12) comprises at least one pitch actuator (16; 19) for tilting the bale forming device (7) and/or the wrapping device (9) about a horizontal pitch tilting axis (13) which extends transversely to the driving direction.

3. The baling press according to one of the preceding claims, wherein the slope compensation device (12) provides a common tilting of the bale forming device (7) and the wrapping device (9) with respect to ground support surface defined by the chassis (4) substantially without relative movement between bale forming device (7) and wrapping device (9).

4. The baling press according to one of the preceding claims, wherein a control device (20) for controlling the slope compensation device (12) is provided depending on the operating state of the bale forming device (7) and/or the wrapping device (9).

5. The baling press according to the preceding claim, wherein the control device (20) comprises an actuator (24) for temporarily limited tilting of the bale forming device (7) and/or the wrapping device (9) during a bale transfer from the bale forming device (7) to the wrapping device (9) and/or during a bale wrapping process.

6. The baling press according to the preceding claim, wherein the control device deactivates and/or controls the slope compensation device (12) after completing a wrapping process and/or temporarily outside a bale transfer and/or a wrapping process in such a way that the bale forming device (7) and the wrapping device (9) are held in a ground-parallel neutral position.

7. The baling press according to one of the preceding claims, wherein the chassis (4) is formed as an adjustable Bogey chassis and chassis actuators (19) for adjusting the cross-members (18) of the Bogey chassis form part of the slope compensation device (12).

8. The baling press according to one of the preceding claims, wherein the bale forming device (7) and/or the wrapping device (9) and/or a chassis upper part (3o) is supported to be tiltable with respect to a chassis lower part (3u) supported by the chassis (4).

9. The baling press according to the preceding claim, wherein the bale forming device (7) and/or the wrapping device (9) is supported to be tiltable about a transverse inclination tilting axis (14) which is centrally, fixedly arranged on the chassis lower part (3u), which is supported by the chassis (4), and at least one transverse inclination actuator (22) is arranged to be spaced from the mentioned transverse inclination tilting axis (14).

10. The baling press according to one of the preceding claims, wherein the bale forming device (7) and/or the wrapping device (9) and/or a chassis upper part (3o) supporting the bale forming device (7) and the wrapping device (9) is supported on two spaced, eccentrically arranged, horizontal transverse inclination tilting axes (14) directed approximately in the driving direction, which transverse inclination tilting axes (14) are height adjustable with respect to a chassis lower part (3u) supported by the chassis (4).

11. The baling press according to one of the preceding claims, wherein a determination device for determining the hill slope and/or an inclined position of the baling press in the sense of a deviation with respect to a horizontal plane is provided, and control means for activating the slope compensation device (12) depending on the determined slope and/or the determined inclined position are provided.

12. The baling press according to the preceding claim, wherein the control means are formed in such a way that the bale forming device (7) and/or the wrapping device (9) are more and more tilted in the opposite direction as the slope increases and/or the bale forming device (7) and/or the wrapping device (9) are tilted in such a way that the mentioned inclined position becomes as small as possible.

13. The baling press according to one of the two preceding claims, wherein the determination device comprises an inclination sensor for determining an absolute inclination with respect to the horizontal and/or with respect to the vertical.

## Revendications

1. Presse à fourrage comprenant un train de roulement (4) destiné à l'appui au sol, un ramasseur (5) destiné à ramasser au sol un produit de récolte, un dispositif formeur de balles (7) destiné à former en balles le produit de récolte ramassé, un enrouleur (9) destiné à envelopper les balles avec un filet, une feuille ou similaire, ainsi qu'un dispositif compensateur de déclivité (12) destiné à basculer l'enrouleur (9) et/ou le dispositif formeur de balles (7) inversement à une déclivité du sol, **caractérisée en ce que** le dispositif compensateur de déclivité (12) présente au moins un actionneur de réglage d'inclinaison transversale (19, 22) destiné à basculer le dispositif formeur de balles et/ou l'enrouleur (9) transversalement au sens de marche autour d'au moins un axe de bascule d'inclinaison transversale (14) horizontal s'étendant à peu près dans le sens de marche, le train de roulement (4), par rapport à une partie de châssis (3o) sur laquelle le dispositif formeur de balles (7) et/ou l'enrouleur (9) sont logés, étant réalisé de manière réglable en hauteur, des parties droites et gauches du train de roulement étant réalisées de manière réglable en hauteur indépendamment les unes des autres et/ou en sens inverse les unes par rapport aux autres.

2. Presse à fourrage selon la revendication précédente, le dispositif compensateur de déclivité (12) présentant au moins un actionneur de réglage d'inclinaison de tangage (16 ; 19) destiné à basculer le dispositif formeur de balles (7) et/ou l'enrouleur (9) autour d'un axe de bascule d'inclinaison de tangage (13) horizontal s'étendant transversalement au sens de marche.

3. Presse à fourrage selon l'une quelconque des revendications précédentes, le dispositif compensateur de déclivité (12) ménageant un basculement commun du dispositif formeur de balles (7) et de l'enrouleur (9) par rapport à une surface au sol définie par le train de roulement (4), essentiellement sans mouvement relatif entre le dispositif formeur de balles (7) et l'enrouleur (9).

4. Presse à fourrage selon l'une quelconque des revendications précédentes, un dispositif de commande (20) destiné à commander le dispositif compensateur de déclivité (12) en fonction de l'état de fonctionnement du dispositif formeur de balles (7) et/ou de l'enrouleur (9) étant ménagé.

5. Presse à fourrage selon la revendication précédente, le dispositif de commande (20) présentant un actionneur (24) pour le basculement temporellement limité du dispositif formeur de balles (7) et/ou de l'enrouleur (9) pendant un transfert de balle du dispositif formeur de balles (7) à l'enrouleur (9) et/ou pendant une opération d'enroulement de balle.

6. Presse à fourrage selon la revendication précédente, le dispositif de commande, après l'achèvement d'une opération d'enroulement et/ou temporellement en dehors d'un transfert de balle et/ou d'une opération d'enroulement, procédant à une désactivation et/ou à une commande de manière à ce que le dispositif formeur de balles (7) et l'enrouleur (9) soient maintenus dans une position neutre parallèle au sol.

7. Presse à fourrage selon l'une quelconque des revendications précédentes, le train de roulement (4) étant réalisé comme train de roulement à boggie réglable, et des actionneurs de train de roulement (19) destinés à régler le support d'essieu (18) du train de roulement à boggie formant une partie du dispositif compensateur de déclivité (12).

8. Presse à fourrage selon l'une quelconque des revendications précédentes, le dispositif formeur de balles (7) et/ou l'enrouleur (9) et/ou une partie supérieure (3o) de châssis étant logés de manière basculable par rapport à une partie inférieure (3u) de châssis portée par le train de roulement (4).

9. Presse à fourrage selon la revendication précédente, le dispositif formeur de balles (7) et/ou l'enrouleur (9) étant logés de manière basculable autour d'un axe de basculement d'inclinaison transversale (14) disposé de manière centrale fixe sur la partie inférieure (3u) de châssis qui est portée par le train de roulement (4), et au moins un actionneur de réglage d'inclinaison transversale (22) étant disposé à distance du dit axe de basculement d'inclinaison transversale (14).

10. Presse à fourrage selon l'une quelconque des revendications précédentes, le dispositif formeur de balles (7) et/ou l'enrouleur (9) et/ou une partie supérieure (3o) de châssis portant le dispositif formeur de balles (7) et l'enrouleur (9) étant logés sur deux axes de basculement d'inclinaison transversale (14) distancés l'un de l'autre, disposés de manière excentrée, situés en étant orientés à peu près en sens de marche, lesquels axes de basculement d'inclinaison transversale (14) sont réglables en hauteur par rapport à une partie inférieure (3u) de châssis portée par le train de roulement (4).

11. Presse à fourrage selon l'une quelconque des revendications précédentes, un dispositif de détermination destiné à déterminer la déclivité et/ou une position inclinée de la presse à fourrage au sens d'un écart par rapport à un plan horizontal étant ménagé, et des moyens de commande destinés à commander le dispositif compensateur de déclivité (12) en fonction de la déclivité déterminée et/ou de la position inclinée déterminée étant ménagés.

12. Presse à fourrage selon la revendication précédente, les moyens de commande étant conçus de manière à ce que le dispositif formeur de balles (7) et/ou l'enrouleur (9) soient basculés de plus en plus fort en direction inverse plus la déclivité augmente et/ou le dispositif formeur de balles (7) et/ou l'enrouleur (9) étant basculés de manière à ce que ladite position inclinée soit la plus petite possible.

13. Presse à fourrage selon l'une quelconque des deux revendications précédentes, le dispositif de détermination présentant un capteur d'inclinaison destiné à déterminer une inclinaison absolue par rapport à l'horizontale et/ou par rapport à la verticale.
